# EUROPEAN PATENT APPLICATION

(11) **EP 2 772 591 A1**
(43) Date of publication of application: **03.09.2014**
(21) Application number: 11874720.3
(22) Date of filing: 24.10.2011
(51) Int. Cl.: E02F 9/22, F02D 29/04, F02D 41/04

(54) **CONTROLLING DEVICE USED TO SAVE FUEL FOR CONSTRUCTION MACHINERY**

(71) Applicant: Volvo Construction Equipment AB, 631 85 Eskilstuna (SE)
(72) Inventor: KIM, Dong-Soo, Changwon-si Gyeongsangnam-do 645-779 (KR)
(74) Representative: Zimmermann, Tankred Klaus
(86) International application number: PCT/KR2011/007921
(87) International publication number: WO 2013/062146

(57) **Abstract**

A control apparatus for fuel savings for a construction machine is disclosed, which can set engine and pump input torques to be in a high efficiency section at an equal level of the final output horsepower of a pump if a fuel saving mode is selected through an installed fuel saving mode switch, and thus can obtain a fuel saving effect for an equal amount of work.

## Description

### TECHNICAL FIELD

The present invention relates to a control apparatus for fuel savings for a construction machine. More particularly, the present invention relates to a control apparatus for fuel savings for a construction machine, which can set engine and pump input torques to be in a high efficiency section at an equal level of the final output horsepower of a pump if a fuel saving mode is selected through an installed fuel saving mode switch, and thus can obtain a fuel saving effect for an equal amount of work.

### BACKGROUND ART

In general, in setting an engine speed and the maximum input torque of a hydraulic pump, a pump discharge flow rate by the engine speed can be sufficiently obtained even during low-load working by heightening the engine speed and lowering the pump input torque on the basis of an equal output horsepower during a work in which the amount of work is preferential.

However, during high-load working, the amount of work is limited to the corresponding set horsepower. In this case, if an engine is driven so that the engine speed is set to be in a relatively high section and the pump input torque is set to be in a relatively low section, fuel consumption of the engine is relatively increased for the equal output horsepower.

### DISCLOSURE

### TECHNICAL PROBLEM

Therefore, the present invention has been made to solve the above-mentioned problems occurring in the related art, and one subject to be achieved by the present invention is to provide a control apparatus for fuel savings for a construction machine, which can make an engine operate in a high fuel efficiency section of the engine and thus can lower fuel consumption on the basis of an equal amount of work by lowering a driving speed on the basis of an equal pump output horsepower and heightening the maximum input torque setting of a pump when an operator requires a fuel saving driving.

### TECHNICAL SOLUTION

In accordance with an aspect of the present invention, a control apparatus for fuel savings for a construction machine, having an engine and a variable displacement hydraulic pump connected to and driven by the engine, includes a mode selection switch selecting any one setting step among a plurality of setting steps for a speed of the engine and a maximum input torque of the hydraulic pump according to a user's key operation; a fuel saving mode selection switch selecting a fuel saving mode according to the user's key operation; a first data storage means for storing first data that is composed of the engine speed that becomes a standard when the fuel saving mode is not selected and the maximum input torque value of the hydraulic pump for each of the plurality of setting steps; a second data storage means for storing second data that is composed of an engine speed setting value that is lower than the engine speed of the first data and the maximum input torque value of the hydraulic pump that is higher than the maximum input torque value of the hydraulic pump of the first data; and a controller for fuel savings controlling the engine and the hydraulic pump on the basis of the second data composed of the engine speed and the maximum input torque value of the hydraulic pump in the setting step that is selected by the mode selection switch when the fuel saving mode is selected through the fuel saving mode selection switch, and controlling the engine and the hydraulic pump on the basis of the first data in the setting step that is selected by the mode selection switch when the fuel saving mode is not selected through the fuel saving mode selection switch.

The controller for fuel savings may include a first control means for controlling the engine and the hydraulic pump on the basis of the second data composed of the engine speed and the maximum input torque value of the hydraulic pump in the setting step that is selected by the mode selection switch if a fuel saving mode selection signal is input from the fuel saving mode selection switch; and a second control means for controlling the engine and the hydraulic pump on the basis of the first data composed of the engine speed and the maximum input torque value of the hydraulic pump in the setting step that is selected by the mode selection switch if a fuel saving mode non-selection signal is input from the fuel saving mode selection switch.

### ADVANTAGEOUS EFFECT

According to the present invention, when the fuel saving mode is selected, the engine and pump input torques can be set to be in the high efficiency section at the equal level of the final output horsepower of the pump and thus the fuel saving effect for the equal amount of work can be obtained.

That is, when the operator requires the fuel saving driving, the engine can operate in the high fuel efficiency section of the engine and thus the fuel consumption can be lowered on the basis of the equal amount of work by lowering the driving speed on the basis of the equal pump output horsepower and heightening the maximum input torque setting of the pump.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram illustrating the configuration of a control apparatus for fuel savings for a construction machine according to an embodiment of the present invention;
Fig. 2 is a diagram illustrating the maximum torque limit of a variable displacement hydraulic pump according to an embodiment of the present invention; and
Fig. 3 is a comparative diagram illustrating engine operation point and fuel efficiency according to an embodiment of the present invention.

* Description of Reference Numerals in the Drawing
101: mode selection switch
102: fuel saving mode selection switch
103: controller for fuel savings

### BEST MODE

Hereinafter, preferred embodiments of the present invention will be described in detail with reference to the accompanying drawings.

The matters defined in the description, such as the detailed construction and elements, are nothing but specific details provided to assist those of ordinary skill in the art in a comprehensive understanding of the invention, and the present invention is not limited to the embodiments disclosed hereinafter.

For an accurate explanation of the present invention, portions that are not related to the explanation are omitted, and in the entire description of the present invention, similar reference numerals are used for the similar elements.

In the entire description and claims of the present invention, the term "comprises" and/or "includes" means that one or more other constituent elements are not excluded in addition to the described constituent elements.

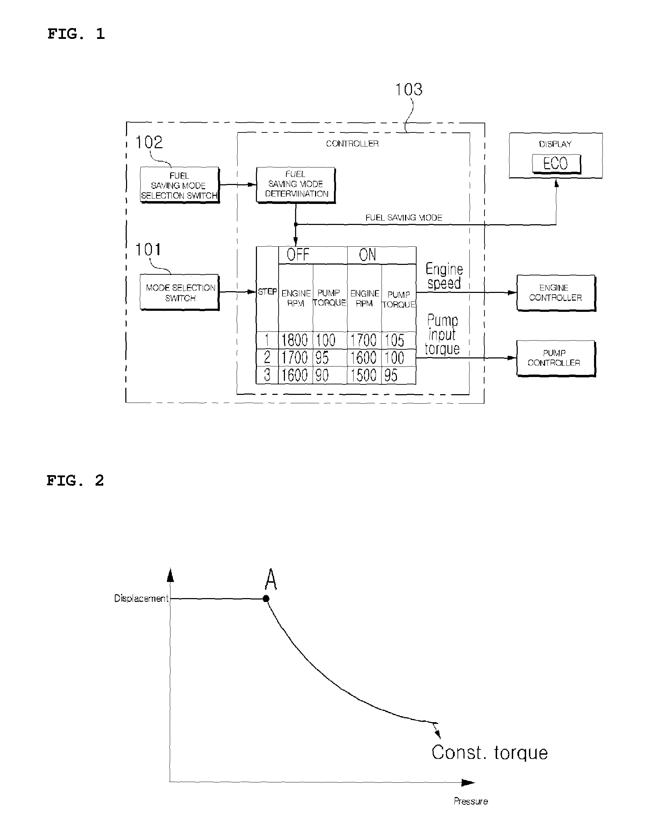

Fig. 1 is a block diagram illustrating the configuration of a control apparatus for fuel savings for a construction machine according to an embodiment of the present invention.

As illustrated in Fig. 1, a control apparatus for fuel savings for a construction machine according to the present invention briefly includes a mode selection switch 101, a fuel saving mode selection switch 102, a first data storage means (not illustrated), a second data storage means (not illustrated), and a controller 103 for fuel savings.

That is, the control apparatus for fuel savings for a construction machine having an engine and a variable displacement hydraulic pump connected to and driven by the engine, includes the mode selection switch 101 selecting any one setting step among a plurality of setting steps for a speed of the engine and a maximum input torque of the hydraulic pump according to a user's key operation; the fuel saving mode selection switch 102 selecting a fuel saving mode according to the user's key operation; the first data storage means (not illustrated) for storing first data that is composed of the engine speed that becomes a standard when the fuel saving mode is not selected and the maximum input torque value of the hydraulic pump for each of the plurality of setting steps; the second data storage means (not illustrated) for storing second data that is composed of an engine speed setting value that is lower than the engine speed of the first data and the maximum input torque value of the hydraulic pump that is higher than the maximum input torque value of the hydraulic pump of the first data; and the controller 103 for fuel savings controlling the engine and the hydraulic pump on the basis of the second data composed of the engine speed and the maximum input torque value of the hydraulic pump in the setting step that is selected by the mode selection switch when the fuel saving mode is selected through the fuel saving mode selection switch, and controlling the engine and the hydraulic pump on the basis of the first data in the setting step that is selected by the mode selection switch when the fuel saving mode is not selected through the fuel saving mode selection switch.

Here, the mode selection switch 101 selects any one setting step among the plurality of setting steps for the speed of the engine and the maximum input torque of the hydraulic pump according to the user's key operation and provides the selected setting step to the controller 103 for fuel savings so that an operator can select an appropriate working mode according to the kind of work. For each of the plurality of setting steps, first data that is composed of the engine speed that becomes the standard when the fuel saving mode is selected and the maximum input torque value of the hydraulic pump and second data that is composed of the engine speed setting value that becomes the standard together with the first data when the fuel saving mode is selected and the maximum input torque value of the hydraulic pump are set and provided. For example, as the first data in the first step, the engine RPM is set to 1800 and the torque value is set to 100, and as the second data in the first step, the engine RPM is set to 1700 and the torque value is set to 105. Further, as the first data in the second step, the engine RPM is set to 1700 and the torque value is set to 95, and as the second data in the second step, the engine RPM is set to 1600 and the torque value is set to 100.

The fuel saving mode selection switch 102 selects the fuel saving mode according to the user's key operation. If the fuel saving mode is selected according to the user's key operation, the fuel saving mode selection switch 102 inputs a fuel saving mode selection signal to the controller for fuel savings, while if the fuel saving mode is not selected, the fuel saving mode selection switch 102 inputs a fuel saving mode non-selection signal to the controller for fuel saving. Through this, the fuel saving mode selection switch 102 informs the controller for fuel savings of the user's selection with respect to the fuel saving mode.

The first data storage means (not illustrated) stores the first data that is composed of the engine speed that becomes the standard when the fuel saving mode is not selected and the maximum input torque value of the hydraulic pump for each of the plurality of setting steps.

For the fuel savings, the second data storage means (not illustrated) stores the second data that is composed of the engine speed setting value that is lower than the engine speed of the first data and the maximum input torque value of the hydraulic pump that is higher than the maximum input torque value of the hydraulic pump of the first data. For example, as the first data in the first step, the engine RPM is set to 1800 and the torque value is set to 100, and as the second data in the first step, the engine RPM is set to 1700 and the torque value is set to 105. Further, as the first data in the second step, the engine RPM is set to 1700 and the torque value is set to 95, and as the second data in the second step, the engine RPM is set to 1600 and the torque value is set to 100.

The controller 103 for fuel savings controls the engine and the hydraulic pump on the basis of the second data composed of the engine speed and the maximum input torque value of the hydraulic pump in the setting step that is selected by the mode selection switch 101 when the fuel saving mode is selected through the fuel saving mode selection switch 102, and controls the engine and the hydraulic pump on the basis of the first data in the setting step that is selected by the mode selection switch 101 when the fuel saving mode is not selected through the fuel saving mode selection switch 102.

The controller 103 for fuel savings may include a first control means for controlling the engine and the hydraulic pump on the basis of the second data composed of the engine speed and the maximum input torque value of the hydraulic pump in the setting step that is selected by the mode selection switch 101 if the fuel saving mode selection signal is input from the fuel saving mode selection switch 102; and a second control means for controlling the engine and the hydraulic pump on the basis of the first data composed of the engine speed and the maximum input torque value of the hydraulic pump in the setting step that is selected by the mode selection switch 101 if the fuel saving mode non-selection signal is input from the fuel saving mode selection switch 102.

Hereinafter, the operation of the control apparatus for fuel savings for a construction machine according to an embodiment of the present invention as illustrated in Fig. 1 will be described.

First, the mode selection switch 101 selects any one setting step among the plurality of setting steps for the speed of the engine and the maximum input torque of the hydraulic pump according to the user's key operation and provides the selected setting step to the controller 103 for fuel savings so that the operator can select the appropriate working mode according to the kind of work.

Next, the controller 103 for fuel savings controls the engine and the hydraulic pump on the basis of the second data composed of the engine speed and the maximum input torque value of the hydraulic pump in the setting step that is selected by the mode selection switch 101 when the fuel saving mode is selected through the fuel saving mode selection switch 102.

Then, the controller 103 for fuel savings controls the engine and the hydraulic pump on the basis of the first data in the setting step that is selected by the mode selection switch 101 when the fuel saving mode is not selected through the fuel saving mode selection switch 102.

That is, the controller 103 for fuel savings controls the engine and the hydraulic pump on the basis of the second data composed of the engine speed and the maximum input torque value of the hydraulic pump in the setting step that is selected by the mode selection switch 101 if the fuel saving mode selection signal is input from the fuel saving mode selection switch 102.

If the fuel saving mode non-selection signal is input from the fuel saving mode selection switch 102, the controller 103 for fuel savings controls the engine and the hydraulic pump on the basis of the first data composed of the engine speed and the maximum input torque value of the hydraulic pump in the setting step that is selected by the mode selection switch 101.

The fuel saving mode selection switch 102 selects the fuel saving mode according to the user's key operation. If the fuel saving mode is selected according to the user's key operation, the fuel saving mode selection switch 102 inputs the fuel saving mode selection signal to the controller 103 for fuel savings, while if the fuel saving mode is not selected, the fuel saving mode selection switch 102 inputs the fuel saving mode non-selection signal to the controller 103 for fuel saving.

Through this, the fuel saving mode selection switch 102 informs the controller 103 for fuel savings of the user's selection with respect to the fuel saving mode.

The first data includes the engine speed that becomes the standard when the fuel saving mode is selected and the maximum input torque value of the hydraulic pump for each of the plurality of setting steps.

The second data includes the engine speed setting value that is lower than the engine speed of the first data and the maximum input torque value of the hydraulic pump that is higher than the maximum input torque value of the hydraulic pump of the first data for the fuel savings.

For example, as the first data in the first step, the engine RPM is set to 1800 and the torque value is set to 100, and as the second data in the first step, the engine RPM is set to 1700 and the torque value is set to 105. Further, as the first data in the second step, the engine RPM is set to 1700 and the torque value is set to 95, and as the second data in the second step, the engine RPM is set to 1600 and the torque value is set to 100.

As described above, if the fuel saving mode is not selected through the fuel saving mode selection switch, the controller for fuel savings controls the engine and the hydraulic pump on the basis of the first data in the setting step that is selected by the mode selection switch, while if the fuel saving mode is selected through the fuel saving mode selection switch, the controller for fuel savings controls the engine and the hydraulic pump on the basis of the second data (i.e., including the engine speed setting value that is lower than the engine speed of the first data and the maximum input torque value of the hydraulic pump that is higher than the maximum input torque value of the hydraulic pump of the first data) in the setting step that is selected by the mode selection switch. Accordingly, if the operator requires the fuel saving driving, the engine can operate in the high fuel efficiency section of the engine and thus the fuel consumption can be lowered on the basis of the equal amount of work by lowering the driving speed on the basis of the equal pump output horsepower and heightening the maximum input torque setting of the pump.

Fig. 2 is a diagram illustrating the maximum torque limit of a variable displacement hydraulic pump according to an embodiment of the present invention.

The discharge capacity of a variable displacement pump that supplies hydraulic fluid to a working device according to opening or closing of a main control valve is controlled to be increased in proportion to an operation amount of the main control valve. If pressure of a pump that drives a hydraulic cylinder installed on the working device is below a predetermined value depending on a load of the working device, the working device has the maximum speed when the control valve is maximally operated, and the maximum speed is proportional to the driving speed of the pump.

Since the maximum output specification of an engine that drives the pump of the construction machine is limited, the maximum driving torque of the pump is restricted below the maximum torque of the engine. Further, an engine control mode selection means, which can set the engine speed and the pump input torque so as to adjust the working speed according to the work situation of the operator, is provided to adjust the working speed and to obtain the corresponding fuel saving effect. During low-load working, the maximum flow rate of the pump is heightened as the engine RPM becomes high according to each mode, and thus the working speed becomes relatively high. During high-load working, the working speed becomes relatively high as the multiplication of the engine RPM and the maximum input torque of the pump becomes high. Here, in order to discriminate the typical amount of work and the fuel consumption by a predetermined amount according to the mode, the output is proportionally limited and the engine speed and the pump input torque are discriminately set in stages.

The pump is controlled by a control means that limits the input torque below a predetermined value, and an example of the characteristic is as shown in Fig. 2. If the control valve is maximally operated during low-load working (the pressure value is below A), the hydraulic fluid is discharged at a flow rate that is proportional to the engine speed and the maximum discharge capacity of the pump. However, during the high-load working, since the pressure that acts on the working device is increased, the maximum discharge flow rate of the pump is gradually decreased as shown in Fig. 2 to lower the speed of the working device.

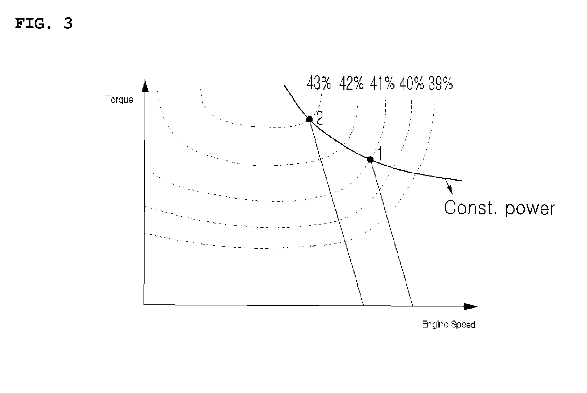

Fig. 3 is a comparative diagram illustrating engine operation point and fuel efficiency according to an embodiment of the present invention.

If the maximum driving torque of the pump is set to point 1 in order to limit the output to a predetermined value in Fig. 3, the fuel efficiency of the engine becomes 41% during the high-load working. If the maximum input torque of the pump is heightened to point 2 so as to lower the engine speed to a predetermined value based on the same output setting and to output equal horsepower, the fuel efficiency of the engine becomes 43%, and thus it is expected that the fuel efficiency is improved by about 4.7% as compared with the fuel efficiency of point 1 based on the same amount of work. That is, although it is expected that the working speed is lowered as the engine speed is lowered during low-load working, the fuel consumption with respect to the equal amount of work is decreased during the high-load working, and thus the fuel efficiency can be improved.

### INDUSTRIAL APPLICABILITY

As apparent from the above description, the present invention can be used in the control apparatus for fuel savings for a construction machine. More specifically, if a fuel saving mode is selected through an installed fuel saving mode switch, a fuel saving effect can be obtained for an equal amount of work which can set engine and pump input torques to be in a high efficiency section at an equal level of the final output horsepower of a pump.

## Claims

1. A control apparatus for fuel savings for a construction machine having an engine and a variable displacement hydraulic pump connected to and driven by the engine, the control apparatus comprising:
a mode selection switch selecting any one setting step among a plurality of setting steps for a speed of the engine and a maximum input torque of the hydraulic pump according to a user's key operation;
a fuel saving mode selection switch selecting a fuel saving mode according to the user's key operation;
a first data storage means for storing first data that is composed of the engine speed that becomes a standard when the fuel saving mode is not selected and the maximum input torque value of the hydraulic pump for each of the plurality of setting steps;
a second data storage means for storing second data that is composed of an engine speed setting value that is lower than the engine speed of the first data and the maximum input torque value of the hydraulic pump that is higher than the maximum input torque value of the hydraulic pump of the first data; and
a controller for fuel savings controlling the engine and the hydraulic pump on the basis of the second data composed of the engine speed and the maximum input torque value of the hydraulic pump in the setting step that is selected by the mode selection switch when the fuel saving mode is selected through the fuel saving mode selection switch, and controlling the engine and the hydraulic pump on the basis of the first data in the setting step that is selected by the mode selection switch when the fuel saving mode is not selected through the fuel saving mode selection switch.

2. The control apparatus for fuel savings according to claim 1, wherein the controller for fuel savings comprises:
a first control means for controlling the engine and the hydraulic pump on the basis of the second data composed of the engine speed and the maximum input torque value of the hydraulic pump in the setting step that is selected by the mode selection switch if a fuel saving mode selection signal is input from the fuel saving mode selection switch; and
a second control means for controlling the engine and the hydraulic pump on the basis of the first data composed of the engine speed and the maximum input torque value of the hydraulic pump in the setting step that is selected by the mode selection switch if a fuel saving mode non-selection signal is input from the fuel saving mode selection switch.
